# EUROPÄISCHE PATENTANMELDUNG

(11) **EP 2 006 506 A1**
(43) Veröffentlichungstag der Anmeldung: **24.12.2008**
(21) Anmeldenummer: 07110901.1
(22) Anmeldetag: 22.06.2007
(51) Int. Cl.: F02B 37/007, F02B 37/04, F02B 37/10, F02B 37/22, F02B 37/24, F02B 39/10

(54) **Aufladesystem für Brennkraftmaschine**

(71) Anmelder: ABB Turbo Systems AG, 5400 Baden (CH)
(72) Erfinder: Neuenschwander, Peter, , CH-8006 Zürich (CH); Stiasny, Hermann, , CH-5405 Baden-Dättwil (CH); Vlaskos, Ioannis, 5234 Villigen (CH)
(74) Vertreter: ABB Patent Attorneys

(57) **Zusammenfassung**

Bei einem Aufladesystem für Brennkraftmaschinen (10) mit mehreren Abgasturboladern werden elektrische Maschinen (M), welche an die Abgasturbolader gekuppelt sind und verstellbare Leitapparate der Turboladerturbinen (31) kombiniert. Dadurch kann die Anzahl der benötigten elektrischen Maschinen und verstellbarer Leitapparate reduziert werden.

## Beschreibung

### Technisches Gebiet

Die Erfindung bezieht sich auf das Gebiet der mittels Abgasturboladern aufgeladenen Brennkraftmaschinen. Sie betrifft ein Aufladesystem für eine Brennkraftmaschine mit mehreren Abgasturboladern.

### Stand der Technik

Auf grossen 2-Taktmotoren können mehrere Abgasturbolader im Parallelbetrieb eingesetzt werden. Dabei werden in der Regel auf einem einzelnen 2-Taktmotor gleichzeitig nur identische Abgasturbolader verwendet, um insbesondere im transienten Betrieb keine unzulässigen Betriebsbedingungen eines einzelnen Abgasturboladers zu riskieren.

Diese symmetrische Auslegung der Aufladung führt dazu, dass Abgasturbolader, welche zum Zu- und Abführen von Leistung (power take in/ power take out - PTI/PTO) mit einer elektrischen Maschinen gekuppelt sind, im Vergleich etwa zu Systemen mit einer Nutzturbine zur Zeit wirtschaftlich nicht konkurrenzfähig sind, da die Investitionen für die elektrischen Maschinen, Kupplung zum Abgasturbolader für jeden der Abgasturbolader getätigt werden müssen. Weiter beansprucht jede elektrische Maschinen Platz auf der Abgasturbolader-Plattform und verursacht zusätzlichen Wartungsaufwand.

### Kurze Darstellung der Erfindung

Werden bei einem Aufladesystem mit mehreren Abgasturboladern elektrische Maschinen, welche an die Abgasturbolader gekuppelt sind und verstellbare Leitapparate der Abgasturboladerturbinen kombiniert, kann die Anzahl der benötigten elektrischen Maschinen und verstellbarer Leitapparate reduziert werden. Die Reduktion der verstellbaren Leitapparate hat geringere Turbinenverluste zur Folge, da Turbinen mit verstellbarer Leitgeometrie oft einen tieferen Wirkungsgrad aufweisen als Turbinen mit fester Geometrie.

Dabei sind zahlreiche Kombinationen der erwähnten Komponenten denkbar:

Ein Aufladesystem für eine Brennkraftmaschine, umfassend zwei oder mehr als zwei Abgasturbolader, wovon eine erste Teilmenge, also einer bis einer weniger als alle, mit einer elektrischen Maschine gekuppelt ist, und eine zweite Teilmenge, also einer bis einer weniger als alle, mit einer verstellbaren Turbinen-Leitgeometrie ausgestattet ist.

Ein Aufladesystem für eine Brennkraftmaschine, umfassend zwei oder mehr als zwei Abgasturbolader, wobei eine Teilmenge der Abgasturbolader, also einer bis einer weniger als alle, jeweils mit einer elektrischen Maschine gekuppelt ist und mindestens einer dieser mit einer elektrischen Maschine gekuppelten Abgasturbolader mit einer verstellbaren Turbinen-Leitgeometrie ausgestattet ist. Optional sind die übrigen Abgasturbolader konventioneller Art, also weder mit einer elektrischen Maschine gekoppelt noch mit einer verstellbaren Turbinen-Leitgeometrie ausgestattet.

Ein Aufladesystem für eine Brennkraftmaschine, umfassend zwei oder mehr als zwei Abgasturbolader, wobei eine mindestens zwei umfassende Teilmenge der Abgasturbolader, also zwei bis einer weniger als alle, jeweils mit einer elektrischen Maschine gekuppelt ist, wobei jeweils mindestens zwei Abgasturbolader mit einer elektrischen Maschine gekuppelt sind und mindestens einer dieser mit einer elektrischen Maschine gekuppelten Abgasturbolader mit einer verstellbaren Turbinen-Leitgeometrie ausgestattet ist. Optional sind die übrigen Abgasturbolader konventioneller Art, also weder mit einer elektrischen Maschine gekoppelt noch mit einer verstellbaren Turbinen-Leitgeometrie ausgestattet.

Ein Aufladesystem für eine Brennkraftmaschine, umfassend zwei oder mehr als zwei Abgasturbolader, wobei eine Teilmenge der Abgasturbolader, also einer bis einer weniger als alle, jeweils mit einer elektrischen Maschine gekuppelt ist und die übrigen Abgasturbolader jeweils mit einer verstellbaren Turbinen-Leitgeometrie ausgestattet sind.

Ein Aufladesystem für eine Brennkraftmaschine, umfassend zwei oder mehr als zwei Abgasturbolader, wobei eine mindestens zwei umfassende Teilmenge der Abgasturbolader, also zwei bis einer weniger als alle, jeweils mit einer elektrischen Maschine gekuppelt ist, wobei jeweils mindestens zwei Abgasturbolader mit einer elektrischen Maschine gekuppelt sind und die übrigen Abgasturbolader jeweils mit einer verstellbaren Turbinen-Leitgeometrie ausgestattet sind.

Mit den vorgeschlagenen Abgasturboladerkonfigurationen kann die Anzahl elektrischer Maschinen für PTI/PTO-Betrieb reduziert werden, gegebenenfalls bis auf eine einzige elektrische Maschine für das gesamte Aufladesystem.

Mit einem Abgasturbolader mit elektrischer Maschine und variabler Turbinen-Leitgeometrie am gleichen Abgasturbolader, lässt sich die Anzahl benötigter Turbinen-Leitgeometrie-Einheiten bis auf eine reduzieren. Ohne elektrische Maschine wäre indes eine verstellbare Turbinen-Leitgeometrie-Einheit pro Abgasturbolader nötig.

Im Vergleich zu Anlagen mit Nutzturbine, kann dank elektrischer Maschine am Abgasturbolader auf Abgasleitungen und sehr schnell schaltende Überdrehzahlschutzsysteme verzichtet werden. Die Anforderungen an den Überdrehzahlschutz sind wesentlich kleiner, da nur ein Teil der Turbinenleistung der elektrischen Maschine zugeführt wird. Allenfalls kann auch das rechtzeitige Drosseln der Motorleistung und/oder das Öffnen eines Waste-Gates ausreichen.

Der Platzbedarf ist im Vergleich zu einem System mit Nutzturbine kleiner und es ergeben sich weniger Schnittstellen zwischen 2-Taktmotor/Motorenbauer und Schiff/Werft, da die elektrische Maschine via Abgasturbolader mit dem Verbrennungsmotor der Werft geliefert wird.

In Systemen mit SCR (selective catalytic reduction) Katalysatoren können aufgrund der grossen thermischen Trägheit des Katalysators die Aufladung der Brennkraftmaschine mit erfindungsgemässen Aufladesystemen mit elektrischen Maschinen (für PTI/PTO) und verstellbarer Turbinen-Leitgeometrie vorteilhaft sein.

### Kurze Beschreibung der Zeichnungen

Nachfolgend werden verschiedene Ausführungsformen der Erfindung anhand von Zeichnungen detailliert erläutert. Hierbei zeigt
- Fig. 1: ein Aufladesystem mit mehreren Abgasturboladern, wovon einer mit einer elektrischen Maschine verbunden und mit einer verstellbaren Turbinenleitgeometrie ausgestattet ist,
- Fig. 2: ein Aufladesystem mit mehreren Abgasturboladern, wovon zwei jeweils mit einer separaten elektrischen Maschine verbunden sind und einer dieser zwei Abgasturboladern mit einer verstellbaren Turbinenleitgeometrie ausgestattet ist,
- Fig. 3: ein Aufladesystem mit mehreren Abgasturboladern, wovon zwei gemeinsam mit einer elektrischen Maschine verbunden sind einer dieser zwei Abgasturboladern mit einer verstellbaren Turbinenleitgeometrie ausgestattet ist, und
- Fig. 4: ein Aufladesystem mit mehreren Abgasturboladern, wovon einer mit einer elektrischen Maschine verbunden ist und die übrigen mit einer verstellbaren Turbinenleitgeometrie ausgestattet sind.

### Weg zur Ausführung der Erfindung

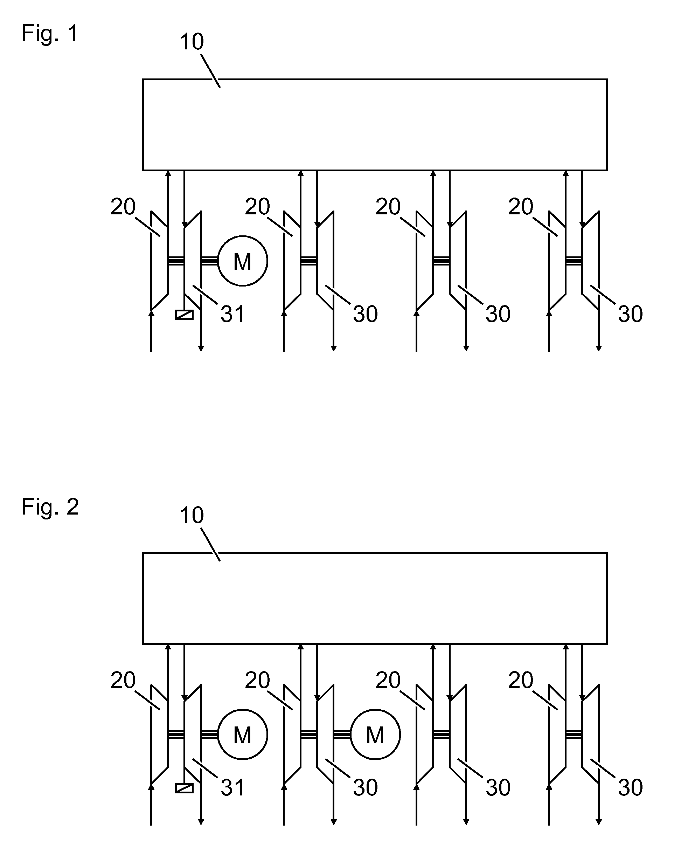

Fig. 1 zeigt ein Aufladesystem für eine Brennkraftmaschine 10 mit vier Abgasturboladern. Jeder der Abgasturbolader umfasst einen Verdichter 20 sowie eine Abgasturbine. In den Figuren wird bei den Abgasturbinen unterschieden zwischen den herkömmlichen Abgasturbinen 30 und den mit verstellbarer Leitgeometrie ausgestatteten Abgasturbinen 31. Ein erster Abgasturbolader ist mit einer elektrischen Maschine (Motor-Generator) verbunden und mit einer Abgasturbine 31 mit verstellbarer Leitgeometrie ausgestattet.

Die Verbindung zwischen dem Abgasturbolader und der elektrischen Maschine kann mittels einer schaltbaren Kupplung oder einer nicht schaltbaren Kupplung realisiert sein. Zwischen der elektrischen Maschine und dem Abgasturbolader kann sich optional ein Getriebe befinden. Die elektrische Maschine kann verdichterseitig oder turbinenseitig angeordnet oder in den Abgasturbolader integriert sein, beispielsweise in den Filterschalldämpfer oder zwischen den Lagern. Die elektrische Maschine kann mit der gleichen Lagerart wie der Abgasturbolader oder mit anderen Lagern ausgerüstet sein (Magnet-, Wälz-, Gleitlager). Die Schmierung oder gegebenenfalls auch die Kühlung kann mit dem gleichen Öl wie beim Abgasturbolader erfolgen. Gegebenfalls kann die Kühlung auch mit Luft oder Wasser erfolgen, wobei im Falle der Luft spezielle Ventilatoren und oder Elektromotoren vorgesehen sein können und oder die von der elektrischen Maschine erwärmte Luft kann vom Verdichter angesaugt werden oder zur Kühlung kann Luft aus dem Luftreceiver verwendet werden.

Fig. 2 zeigt ein Aufladesystem für eine Brennkraftmaschine 10 mit wiederum vier Abgasturboladern. Jeder der Abgasturbolader umfasst einen Verdichter 20 sowie eine Abgasturbine. Neben dem ersten Abgasturbolader, welcher wiederum mit einer elektrischen Maschine verbunden und mit einer Abgasturbine 31 mit verstellbarer Leitgeometrie ausgestattet ist, ist bei diesem Aufladesystem ein weiterer, zweiter Abgasturbolader mit einer zweiten elektrischen Maschine verbunden. Die Abgasturbine 30 dieses zweiten Abgasturboladers weist hingegen keine verstellbare Leitgeometrie auf.

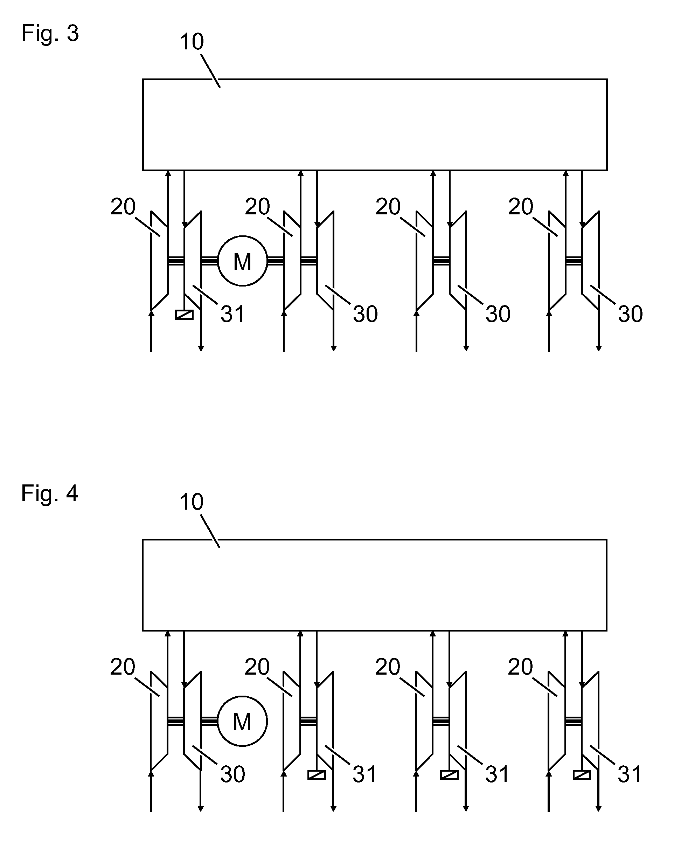

Fig. 3 zeigt ein Aufladesystem für eine Brennkraftmaschine 10 mit wiederum vier Abgasturboladern. Jeder der Abgasturbolader umfasst einen Verdichter 20 sowie eine Abgasturbine. Im Unterschied zum vorherigen Aufladesystem, sind in diesem Aufladesystem die ersten beiden Abgasturbolader mit einer einzigen elektrischen Maschine verbunden. Wiederum weist die Turbine des einen der beiden Abgasturbolader eine verstellbare Leitgeometrie auf.

Fig. 4 schliesslich zeigt ein Aufladesystem für eine Brennkraftmaschine 10 mit wiederum vier Abgasturboladern. Jeder der Abgasturbolader umfasst einen Verdichter 20 sowie eine Abgasturbine. Wiederum ist ein erster Abgasturbolader mit einer elektrischen Maschine verbunden. In diesem Aufladesystem weist jedoch nicht die Abgasturbine des mit der elektrischen Maschine verbundenen Abgasturboladers eine verstellbare Leitgeometrie auf, sondern die Abgasturbinen aller übrigen Abgasturbolader.

Der Betriebspunkt des ersten Abgasturboladers, welcher an die elektrische Maschine gekuppelt ist, kann in Abhängigkeit des Verbrennungsmotorbetriebspunktes und weiterer Parameter wie Umwelt, Motor-, Abgasturbolader-Verschmutzung, Zustand des allenfalls installierten Katalysators Strombedarf der Bezüger und Stromproduktion anderer Erzeuger oder Stromzufuhr in Abhängigkeit des Bedarfs der übrigen Bezüger und der Leistung der Erzeuger durch das Abtriebs- oder Antriebsmoment dieser Maschine gesteuert respektive geregelt werden.

Damit die übrigen, an keine elektrische Maschine gekuppelten Abgasturbolader im gewünschten Betriebspunkt laufen, wird die Turbinenfläche der mit verstellbare Leitgeometrie ausgerüsteten Abgasturbinen so verkleinert oder vergrössert, dass diese Abgasturbolader einen bestimmten Betriebspunkt erreichen. Optional kann dadurch der Betriebspunkt der übrigen Abgasturbolader demjenigen des Abgasturboladers, welcher mit der elektrischen Maschine gekuppelt ist, angeglichen werden. Als Alternative ist es auch möglich, die Turbinenfläche in Abhängigkeit des Betriebspunktes des Verbrennungsmotors etc. vorzugeben und den Abgasturbolader, welcher an eine elektrische Maschine gekoppelt ist, über das Abtriebs- oder Antriebsmoment dieser Maschine zu steuern respektive zu regeln.

Die vorgeschlagenen Abgasturboladerkonfigurationen können grundsätzlich auch bei 4-Taktmotoren verwendet werden, doch sind zurzeit Aufladesysteme, welche der erwähnten Anordnung entsprechen, für 4-Taktmotoren wenig gebräuchlich.

Es ist auch möglich, die Konfigurationen mit zweistufiger Aufladung anzuwenden, insbesondere auf der Hochdruckstufe.

### Bezugszeichenliste

- 10: Brennkraftmaschine
- 20: Verdichter
- 30: Turbine
- 31: Turbine mit verstellbarer Leitgeometrie
- M: Elektrische Maschine (Motor/Generator)

## Patentansprüche

1. Aufladesystem für eine Brennkraftmaschine, umfassend zwei oder mehr als zwei Abgasturbolader, wovon eine erste Teilmenge, also einer bis einer weniger als alle, mit einer elektrischen Maschine gekuppelt ist, und eine zweite Teilmenge, also einer bis einer weniger als alle, mit einer verstellbaren Turbinen-Leitgeometrie ausgestattet ist.

2. Aufladesystem nach Anspruch 1, wobei eine Teilmenge der Abgasturbolader, also einer bis einer weniger als alle, jeweils mit einer elektrischen Maschine gekuppelt ist und mindestens einer dieser mit einer elektrischen Maschine gekuppelten Abgasturbolader mit einer verstellbaren Turbinen-Leitgeometrie ausgestattet ist.

3. Aufladesystem nach Anspruch 2, wobei die übrigen Abgasturbolader weder mit einer elektrischen Maschine gekoppelt noch mit einer verstellbaren Turbinen-Leitgeometrie ausgestattet sind.

4. Aufladesystem nach Anspruch 1, wobei eine mindestens zwei umfassende Teilmenge der Abgasturbolader, also zwei bis einer weniger als alle, mit einer elektrischen Maschine gekuppelt ist, wobei jeweils mindestens zwei Abgasturbolader gemeinsam mit einer elektrischen Maschine gekuppelt sind und mindestens einer dieser mit einer elektrischen Maschine gekuppelten Abgasturbolader mit einer verstellbaren Turbinen-Leitgeometrie ausgestattet ist.

5. Aufladesystem nach Anspruch 4, wobei die übrigen Abgasturbolader weder mit einer elektrischen Maschine gekoppelt noch mit einer verstellbaren Turbinen-Leitgeometrie ausgestattet sind.

6. Aufladesystem nach Anspruch 1, wobei eine Teilmenge der Abgasturbolader, also einer bis einer weniger als alle, jeweils mit einer elektrischen Maschine gekuppelt ist und die übrigen Abgasturbolader jeweils mit einer verstellbaren Turbinen-Leitgeometrie ausgestattet sind.

7. Aufladesystem nach Anspruch 1, wobei eine mindestens zwei umfassende Teilmenge der Abgasturbolader, also zwei bis einer weniger als alle, jeweils mit einer elektrischen Maschine gekuppelt ist, wobei jeweils mindestens zwei Abgasturbolader gemeinsam mit einer elektrischen Maschine gekuppelt sind und die übrigen Abgasturbolader jeweils mit einer verstellbaren Turbinen-Leitgeometrie ausgestattet sind.

8. Aufladesystem nach einem der vorangehenden Ansprüche, wobei vor- oder nach der Turbine ein Abgaskatalysator angeordnet ist.

9. Brennkraftmaschine, umfassend ein Aufladesystem nach einem der vorangehenden Ansprüche.
